# EUROPEAN PATENT APPLICATION

(11) **EP 2 421 195 A1**
(43) Date of publication of application: **22.02.2012**
(21) Application number: 10772029.4
(22) Date of filing: 06.05.2010
(51) Int. Cl.: H04L 12/04

(54) **CALL CONNECTION METHOD OF RELATION CALL BETWEEN NETWORKS AND SERVICE BROKER SYSTEM**

(30) Priority: 06.05.2009 CN 200910140405
(71) Applicant: Huawei Technologies Co., Ltd., Shenzhen, Guangdong 518129 (CN)
(72) Inventor: YIN, Yingxiong, Shenzhen Guangdong 518129 (CN); LUO, Enliang, Shenzhen Guangdong 518129 (CN)
(74) Representative: Körber, Martin Hans
(86) International application number: PCT/CN2010/072477
(87) International publication number: WO 2010/127626

(57) **Abstract**

In the communications field, the present invention discloses a method for connecting associated calls between networks and a Service Broker system. The method includes: setting a service data unit in the Service Broker system; when receiving a first call from a first network, storing, by a first service execution system, feature information of the first call in the service data unit, generating a routing signal, routing the first call to a second network according to the routing signal to trigger a second call on the second network, receiving the second call that is transferred by a second service execution system according to the feature information stored in the service data unit, and performing connection processing on the first call and the second call. The Service Broker platform is capable of supporting the associated calls triggered by multiple networks; thereby, popularization and application of a Service Broker technology are further facilitated.

## Description

This application claims priority to Chinese Patent Application No. 200910140405.4, filed with the Chinese Patent Office on May 6, 2009 and entitled "METHOD FOR CONNECTING ASSOCIATED CALLS BETWEEN NETWORKS AND SERVICE BROKER SYSTEM", which is incorporated herein by reference in its entirety.

### FIELD OF THE INVENTION

The present invention relates to the communications field, and in particular to a method for connecting associated calls between networks and a Service Broker system.

### BACKGROUND OF THE INVENTION

As next generation telecommunication network architecture, an Internet Protocol (IP) Multimedia Subsystem (IMS) is multi-service application architecture. In a condition of multi-service application, problems of collaboration and consistency among multiple services inevitably occur. In order to effectively control and handle a service interaction problem that exists in the IMS, the 3rd Generation Partnership Project (3GPP) introduces a new network element, that is, a Service Capability interaction Manager service (SCIM) in the IMS system to dedicate to coordination of service operations, that is, a Service Broker platform. In the Service Broker platform, a Service Broker system is set for handling relevant services in the Service Broker platform. The Service Broker platform solves the interaction of the multiple services and a potential conflict problem.

The Service Broker is an important service platform of a Next General Intelligent Network (NGIN) The Service Broker provides capabilities such as service configuration, service interaction, service combination, service binding, and service feature conflict solving, and brings an innovative change for a providing mode of an NGIN service. The Service Broker can quickly combine services, shorten a service providing period, enrich service experience of a user; therefore, the Service Broker platform has a wide market application prospect.

In the implementation of the present invention, the inventor finds that the prior art at least has the following problems: The Service Broker platform cannot support a connection of associated calls that are triggered by multiple networks, in which the multiple networks include multiple networks of the same type, and also include multiple networks of different types, for example, the Service Broker platform can neither support a condition that a calling party and a called party are users of two broadband networks respectively nor support a condition that one party of the calling party and the called party is a broadband network user and the other party is a narrowband network user, that is, the calling party and the called party are associated calls triggered by multiple networks; therefore, further popularization and application of the Service Broker technology are greatly limited.

### SUMMARY OF THE INVENTION

Embodiments of the present invention provide a method for connecting associated calls between networks and a Service Broker system, so as to solve a problem that a Service Broker platform cannot support a connection of associated calls that are triggered by multiple networks.

In one aspect, a method for connecting associated calls between networks, in which a service data unit (SDU) is set in a Service Broker system, is provided. The method includes:
when receiving a first call from a first network, storing, by a first service execution system, feature information of the first call in the SDU, generating a routing signal, and routing the first call to a second network according to the routing signal to trigger a second call on the second network; and
receiving, by the first service execution system, the second call that is transferred by a second service execution system according to the feature information of the first call stored in the SDU, and performing connection processing on the first call and the second call.

In another aspect, a Service Broker system is further provided, including an SDU and a first service execution system.

The first service execution system is configured to store feature information of a first call in the SDU when the first call from a first network is received, generate a routing signal, route the first call to a second network according to the routing signal to trigger a second call on the second network, receive the second call that is transferred by a second service execution system according to the feature information of the first call stored in the SDU, and connect the first call and the second call.

The SDU is configured to store the feature information of the first call.

In still another aspect, a Service Broker system is further provided, including an SDU and a second service execution system.

The SDU is configured to store feature information of a first call from a first network.

The second service execution system is configured to transfer a second call to a first service execution system according to the feature information of the first call stored in the SDU when a second call from a second network is received, in which the feature information of the first call is stored by the first service execution system in the SDU when the first call from the first network is received.

According to the method for connecting associated calls between networks and the Service Broker system that are provided in the embodiments of the present invention, by setting the SDU in the Service Broker system (that is, the Service Broker platform) and transferring the associated calls from multiple networks to a service execution system for connection processing according to the feature information stored in the SDU, the Service Broker platform supports the associated calls that are triggered by multiple networks; thereby, popularization and application of the Service Broker technology are further facilitated.

### BRIEF DESCRIPTION OF THE DRAWINGS

To illustrate the technical solutions in the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from these accompanying drawings without creative efforts.

FIG 1 is a flow chart of a method for connecting associated calls between networks according to an embodiment of the present invention;

FIG 2 is a flow chart of another method for connecting associated calls between networks according to an embodiment of the present invention;

FIG 3 is a schematic diagram of that a second service execution system transfers a second call to a first service execution system according to an embodiment of the present invention;

FIG 4 is a flow chart of a method for connecting associated calls between a narrowband network and a broadband network according to an embodiment of the present invention;

FIG 5 is a schematic networking diagram of a method for connecting associated calls between a narrowband network and a broadband network according to an embodiment of the present invention;

FIG 6 is a flow chart of a method for connecting associated calls between networks according to an embodiment of the present invention;

FIG 7 is a schematic structural diagram of a Service Broker system according to an embodiment of the present invention;

FIG 8 is a schematic structural diagram of a Service Broker system according to an embodiment of the present invention;

FIG 9 is a schematic structural diagram of a Service Broker system according to an embodiment of the present invention;

FIG 10 is a structural block diagram of a service execution system according to an embodiment of the present invention;

FIG 11 is a structural block diagram of another service execution system according to an embodiment of the present invention;

FIG 12 is a structural block diagram of another Service Broker system according to an embodiment of the present invention;

FIG 13 is a structural block diagram of another Service Broker system according to an embodiment of the present invention; and

FIG 14 is a structural block diagram of another Service Broker system according to an embodiment of the present invention.

### DETAILED DESCRIPTION OF THE EMBODIMENTS

The technical solution of the present invention is clearly and completely described in the following with reference to the accompanying drawings. It is obvious that the embodiments to be described are only a part rather than all of the embodiments of the present invention. All other embodiments obtained by persons skilled in the art based on the embodiments of the present invention without creative efforts shall fall within the protection scope of the present invention.

101: When receiving a first call from a first network, a first service execution system stores feature information of the first call in the SDU, generates a routing signal, routes the first call to a second network according to the routing signal, and triggers a second call on the second network.

102: The first service execution system receives the second call that is transferred by a second service execution system according to the feature information of the first call stored in the SDU, and performs connection processing on the first call and the second call.

According to this embodiment of the present invention, by setting the SDU in the Service Broker system (that is, a Service Broker platform) and transferring the associated calls triggered by multiple networks to a service execution system for connection processing according to the feature information stored in the SDU, the Service Broker platform supports the associated calls triggered by multiple networks; thereby, popularization and application of the Service Broker technology are further facilitated.

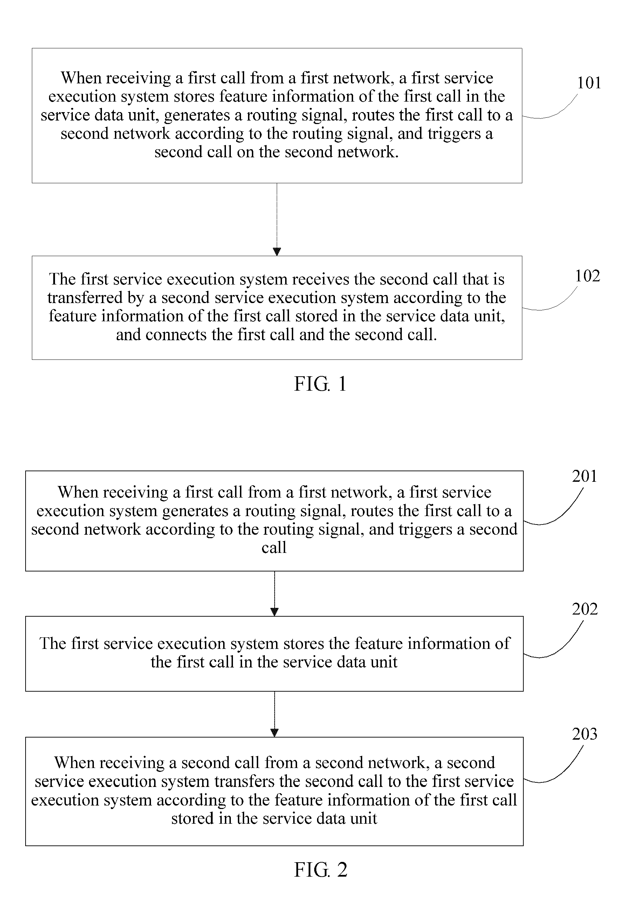

Referring to FIG 2, an embodiment of the present invention provides another method for connecting associated calls between networks. Firstly, an SDU is set in a Service Broker system (that is, a Service Broker platform). Preferably, the SDU set in the Service Broker system is of a global type, and the SDU of the global type may be accessed by any service execution system in the Service Broker platform.

The method for connecting associated calls between networks that is provided by this embodiment of the present invention includes the following steps:

201: When receiving a first call from a first network, a first service execution system generates a routing signal, routes the first call to a second network according to the routing signal, and triggers a second call on the second network.

It should be explained that, the associated calls refer to calls having an association relation. For example, for a condition that multiple calls triggered by a user exist and a calling party calls a called party, the calling party triggers an incoming call first; when the incoming call is routed to the called party, an outgoing call is triggered; and the incoming call and the outgoing call are connected, so as to implement a conversation between the calling party and the called party. Here, the incoming call and the outgoing call are two calls having the association relation. Association information used to identify the association relation between at least two calls may be the same call information between the at least two calls, such as a calling number, a called number, and so on; or information capable of being associated through a logic operation, for example, certain or some calling information between the at least two calls that is capable of being associated through the logic operation by using a method such as adding a prefix or a suffix. For example, as for two calls, information B in a second call may be obtained from information A in a first call through a predetermined logic operation, so that through the association relation between the information A and the information B, it is identified that the association relation exists between the first call and the second call.

Here, the first network and the second network are respectively two different networks, and may be networks of the same type, or may be networks of different types. For example, both the first network and the second network may be broadband networks or narrowband networks, or one is a broadband network and the other is a narrowband network, in which the broadband network may be an IMS network, and the narrowband network may be a narrowband fixed network or a narrowband mobile network.

202: The first service execution system stores feature information of the first call in the SDU.

Preferably, the feature information of the first call includes a session identifier (ID) of the first call, the association information used to identify the association relation between the first call and the second call, and a corresponding relation between the session ID of the first call and the association information.

Correspondingly, the storing the feature information of the first call in the SDU may be storing the corresponding relation between the association information and the session ID of the first call in the SDU.

Each call creates a session ID to uniquely identify information related to service logic processing of the call, for example, the session ID may be used to identify service logic interface information of the call, that is, where service logic of the call is processed, and the session ID may be further used to identify processing state information of the service logic of the call and so on.

A service execution system generally includes three layers: A bottom layer is a protocol layer, and a protocol stack of this layer defines and describes a protocol related to service execution; an intermediate layer is a Service Capability Set (SCS) layer, and this layer defines and describes an Application Programming Interface (API) related to service execution; and a top layer is an application layer, which is also called a service layer.

Generally, after a call is triggered to the service execution system, the call is processed from the protocol layer to the SCS layer, the SCS layer searches for the service logic interface information corresponding to the call according to the session ID of the call, invokes the interface information, and performs connection processing on the call object as indicated by the service logic of an application session corresponding to the interface information.

A sequence of step 201 and step 202 is not limited to that step 201 is performed first and then step 202 is performed; the sequence may also be that step 202 is performed first and then step 201 is performed; or step 201 and step 202 may be performed in parallel.

203: When receiving the second call from the second network, a second service execution system transfers the second call to the first service execution system according to the feature information of the first call stored in the SDU. On the first service execution system, connection processing is performed on the first call and second call that are associated with each other.

Preferably, the step of transferring, by the second service execution system, the second call to the first service execution system according to the feature information of the first call stored in the SDU may include the following sub-steps:

□ The second service execution system obtains the association information from the second call.

□ The second service execution system queries the session ID of the first call in the SDU using the obtained association information as an index.

Here, when the association information is the same call information, such as the calling number and the called number, between the first call and the second call, the second service execution system may directly query the session ID of the first call in the SDU using the obtained association information as the index.

When the association information is the information capable of being associated through the logic operation, the second service execution system needs to perform the predetermined logic operation on the obtained association information and obtain association information after the operation first. The association information after the operation is the association information of the first call stored in the SDU after the first service execution system receives the first call of the first network. Subsequently, the second service execution system queries the session ID of the first call in the SDU using the association information after the operation as the index.

□ The second service execution system modifies a session ID of the second call into the found session ID of the first call, and transfers service logic of the second call onto service logic of the first call in the first service execution system.

In the prior art, the Service Broker platform cannot support a connection of associated calls that are triggered by multiple networks, and when multiple associated calls are triggered to the Service Broker platform from multiple networks, the multiple associated calls are allocated to different service execution systems for processing. Specifically, the first service execution system includes an SCS layer session 1 and an application session 1, and after receiving the first call, the SCS layer session 1 of the first service execution system searches, according to a session ID 1 of the first call, for the corresponding service logic interface information and transfers the service logic of the first call to the application session 1 for processing; correspondingly, the second service execution system includes an SCS layer session 2 and an application session 2, and after receiving the second call, the SCS layer session 2 of the second service execution system searches, according to a session ID 2 of the second call, for the corresponding service logic interface information and transfers the service logic of the second call to the application session 2 for processing. It can be seen that two associated calls (the first call and the second call) from multiple networks are respectively processed by two service execution systems (the first service execution system and the second service execution system) in the Service Broker platform; therefore, at this time, the Service Broker platform cannot support the connection processing on the two associated calls.

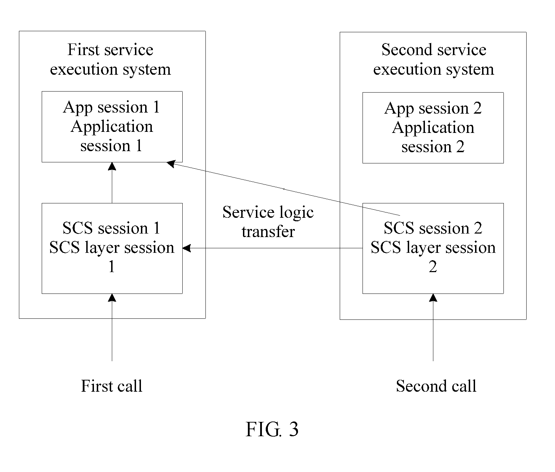

In this embodiment of the present invention, the preceding step □ is described in detail with reference to FIG 3. After the second service execution system modifies the session ID 2 of the second call into the session ID 1 of the first call, the SCS layer session 2 of the second service execution system searches for the corresponding service logic interface information according to the session ID 1 of the first call, and transfers the service logic of the second call to the application session 1 of the first service execution system for processing, so that the second service execution system transfers the received service logic of the second call to the service logic of the first call in the first service execution system. In this way, two associated calls that are triggered to the Service Broker platform from two networks may be uniformly processed by the first service execution system through transferring, so that the Service Broker platform supports the associated calls triggered by multiple networks.

Correspondingly, after the second service execution system transfers the second call to the first service execution system, a subsequent service of the second call may also transfer the service logic to the first service execution system for connection processing according to the modified session ID 1.

It can be seen that, by setting the SDU in the Service Broker system (that is the Service Broker platform) and transferring the associated calls from multiple networks to a service execution system for connection processing according to the feature information stored in the SDU, the Service Broker platform supports the associated calls triggered by multiple networks; thereby, popularization and application of the Service Broker technology are further facilitated.

The method for connecting associated calls between networks that are provided in this embodiment of the present invention is not limited to the connection processing of the associated calls from two networks, but is also applicable to the connection processing of multiple associated calls from multiple networks. The multiple associated calls from multiple networks are respectively triggered to different service execution systems (for example, multiple associated calls of the same user are triggered to different service execution systems), in which any one of the service execution systems may serve as the first service execution system, that is, the feature information of the call received by the service execution system may be stored in the SDU, and other service execution systems respectively transfer received calls to the first service execution system according to the feature information stored in the SDU, so that connection processing may be implemented on the associated calls from the multiple networks in one service execution system; thereby, centralized control of multiple associated calls in one service execution system is implemented, for example, the centralized control is performed on multiple calls of a user.

Furthermore, the SDU is added in the Service Broker system (that is, the Service Broker platform), so that an operator may combine the SDU to form a new service packet, thereby enriching user experience. A current network is not required to be configured, a protocol is not required to be extended, and only new Service Broker interaction logic is required to be added, so an investment of the operator is protected to the largest extent. Furthermore, the connection method may be further applicable to multiple network combinations, for example, the narrowband network to the narrowband network, the broadband network to the broadband network, and the broadband network to the narrowband network or the narrowband network to the broadband network.

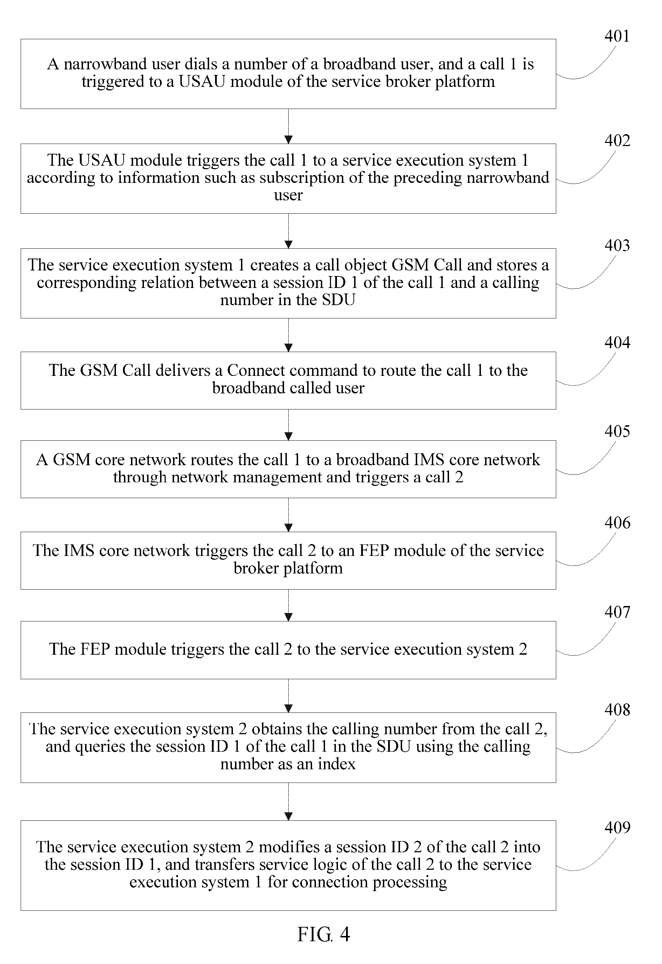

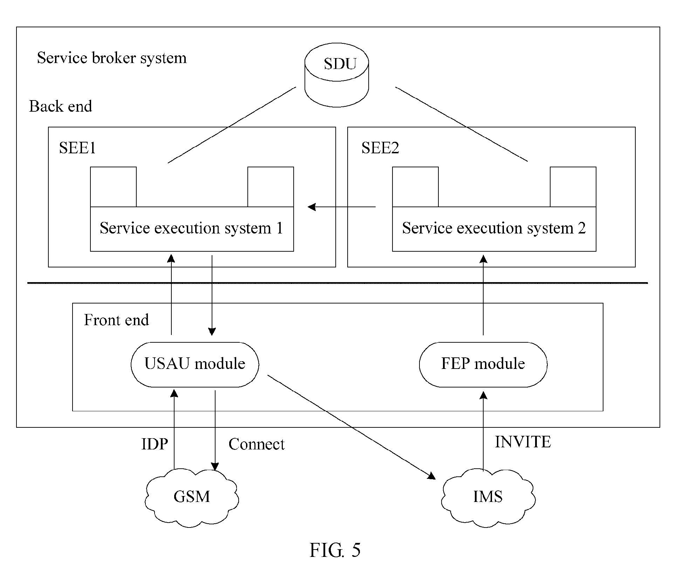

FIG 4 is a schematic diagram of a method for connecting associated calls between a narrowband network and a broadband network according to an embodiment of the present invention. FIG 5 is a schematic structural diagram of an associated call network between a narrowband network and a broadband network in which the method shown in FIG 4 may be applied. A global SDU is set in a Service Broker system (that is, a Service Broker platform). A Global System for Mobile Communications (GSM) network is taken as an example for the narrowband network, and an IMS network is taken as an example for the broadband network.

The Service Broker platform is a distributed platform, and is divided into a front end and a back end. The front end generally refers to an access device, as for narrowband access, the front end generally refers to a Universal Signaling Access Unit (USAU), and as for broadband access, the front end generally refers to a Front End Processor (FEP); the back end generally refers to a Service Execute Environment (SEE), a service execution system in the SSE may process a call received by the front end through a deployed service instance, and interactions between service instances and between a service instance and the front end conform to an interface description language (IDL) invocation specification.

In the networking of this embodiment of the present invention, the USAU serves as a narrowband access module, the FEP serves as a broadband access module, corresponding service instances are respectively deployed on a service execution system 1 and a service execution system 2 on the SEE 1 and SEE 2, an SDU is added on the Service Broker platform, and service logic of the whole platform may be read and written. In this process, a narrowband user dials a number of a broadband user, that is, an initial trigger comes from the narrowband, and the service instance stores feature information of the call in the SDU and enters a waiting state. When a broadband call is triggered to the Service Broker platform from the FEP, the feature information is obtained by querying the SDU, and call logic is transferred to the service execution system 1.

The method specifically includes the following steps:

401: The narrowband user dials the number of the broadband user, and a GSM core network triggers a call 1 to the USAU of the Service Broker platform.

402: The USAU triggers the call 1 to the service execution system 1 according to information such as subscription of the narrowband user.

403: The service execution system 1 creates a call obj ect GSM Call and stores the feature information of the call 1 in the SDU, which specifically includes storing a corresponding relation between a session ID 1 of the call 1 and a calling number in the SDU.

404: The GSM Call delivers a Connect command to route the call 1 to the broadband called user.

405: The GSM core network routes the call 1 to the broadband IMS core network through network management and triggers a call 2 (generally an INVITE request).

406: The IMS core network triggers the call 2 to the FEP of the Service Broker platform.

407: The FEP triggers the call 2 to the service execution system 2.

408: The service execution system 2 creates a call object IMS Call to process the call 2, obtains the calling number from the call 2, and queries the session ID 1 of the call 1 in the SDU using the obtained calling number as an index, so that it is known that a narrowband part of the user is processed on the service execution system 1.

409: The service execution system 2 modifies a session ID 2 of the call 2 into the session ID 1, and transfers the service logic of the call 2 to the service execution system 1 for connection processing.

It can be seen that, by setting the SDU in the Service Broker system (that is the Service Broker platform) and transferring the associated calls from multiple networks to a service execution system for connection processing according to the feature information stored in the SDU, the Service Broker platform supports the associated calls triggered by multiple networks; thereby, popularization and application of the Service Broker technology are further facilitated.

Furthermore, the SDU is added in the Service Broker system, so that an operator may combine the SDU to form a new service packet, thereby enriching user experience. A current network is not required to be configured, a protocol is not required to be extended, and only new Service Broker interaction logic is required to be added, so an investment of the operator is protected to the largest extent.

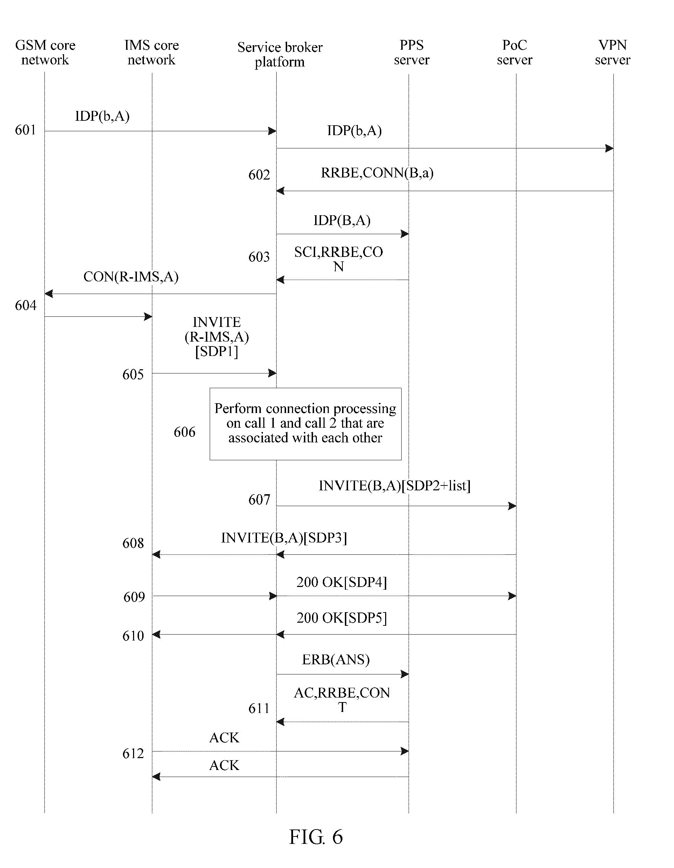

FIG 6 shows an embodiment of another method for connecting associated calls between networks. In this embodiment, a GSM network is taken as an example for a first network and an IMS network is taken as an example for a second network. Specifically, a calling party is a Mobile Switching Centre (MSC) terminal in the GSM network, and the user subscribes to a Virtual Private Network (VPN) service, a Pre-paid service (PPS) and a Push to Talk (PoC) service. The PoC is an intercom service provided in a mobile network. A called party is an IMS terminal, and the user subscribes to a VPN service.

The calling party A calls the called party B, and the process is as follows:

601: The MSC terminal in the GSM network triggers a call 1, and sends an IDP (b, A) message to a Service Broker platform.

In step 601, b represents a short number of the called party B, and A represents a number of the calling party A.

602: The Service Broker platform invokes the VPN service to obtain a long number of the called party B.

This step includes: The Service Broker platform forwards the IDP (b, A) message to a VPN server, and the VPN server finds a long number B of the called party B and a short number a of the calling party A in a database of the VPN server and feeds back the long number B of the called party B and the short number a of the calling party A to the Service Broker platform by using signaling RRBE,CONN(B,a).

603: The Service Broker platform invokes the PPS to perform charging.

This step includes: The Service Broker platform sends the IDP (B, A) message to a PPS server, and the PPS server starts charging logic and feeds back signaling SCI,RRBE,CON to the Service Broker platform.

604: The Service Broker platform modifies the long number B of the called party B into an available number R-IMS in an IMS domain according to a number range of the IMS domain, and sends a Connect command, that is, signaling CON(R-IMS,A) to the MSC terminal of the GSM network, and the MSC terminal routes the call 1 to the IMS terminal.

605: On the IMS core network, trigger another call 2 to the Service Broker platform. Here, the call 2 is an INVITE request, that is, the IMS core network sends signaling INVITE(R-IMS,A)[SDP1] to the Service Broker platform, the call 2 is triggered by the Connect command that is generated by the call 1 and routed to the IMS, and the call 2 carries the SDP1 of a media gateway.

606: Perform, in the Service Broker platform, connection processing on the call 1 and the call 2 that are associated with each other.

607: The call 2 obtains a source number of the called party B (that is the long number of the called party B), the Service Broker platform modifies an IMS routing number tel:R-IMS into the source number of B, and sends a PoC request to a PoC server, that is, sends signaling INVITE(B,A)[SDP2+list] to the PoC server to request an intercom, in which the SDP2 is converted from the SDP1 according to a format required by the PoC server.

608: The PoC server routes the call 2 to the IMS core network through the Service Broker platform, that is, the PoC server sends signaling INVITE(B,A)[SDP3] to the IMS core network through the Service Broker platform, in which the SDP3 is generated by the PoC server.

609: The called party B answers, the IMS core network sends a 200 OK[SDP4] message to the Service Broker platform, and the Service Broker platform forwards the 200 OK[SDP4] message to the PoC server, in which the SDP4 is generated by the IMS core network.

610: The PoC server sends a 200 OK [SDP5] message to the Service Broker platform, and the Service Broker platform forwards the 200 OK [SDP5] message to the IMS core network, in which the SDP5 is generated by the PoC server.

611: After receiving the 200 OK [SDP5] message that is forwarded by the PoC server, the Service Broker platform generates an Answer event, and reports the Answer event to the call 1. The Service Broker platform sends the Answer event to the PPS server, that is, sends ERB(ANS) signaling to the PPS server to notify that the charging begins, and the PPS server feeds back signaling AC,RRBE,CONT to the Service Broker platform to start the charging.

612: The Service Broker platform forwards an ACK message from the IMS core network to the PoC server, and forwards the ACK message from the PoC server to the IMS core network.

In step 606, the call 1 and the call 2 that are triggered to two networks and associated with each other are connected, which may specifically be: Set an SDU of a global type in the Service Broker system (that is, the Service Broker platform); a service execution system 1 that receives the call 1 stores feature information of the call 1 in the SDU; a service execution system 2 that receives the call 2 queries the SDU to obtain the feature information of the call 1 and transfers the call 2 to the service execution system 1 for connection processing, so that the source number of the called party B may be obtained, the Answer event may be reported to the call 1, and so on.

It can be seen that, by setting the SDU in the Service Broker system (that is the Service Broker platform) and transferring the associated calls from multiple networks to a service execution system for connection processing according to the feature information stored in the SDU, the Service Broker platform supports the associated calls triggered by multiple networks; thereby, popularization and application of the Service Broker technology are further facilitated.

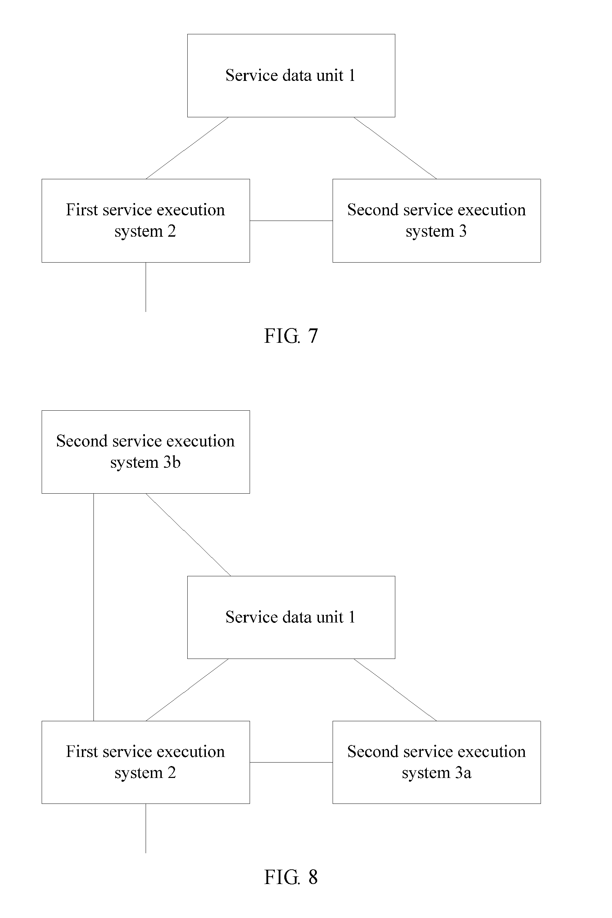

Referring to FIG 7, a service broker system provided in an embodiment of the present invention includes an SDU 1 and at least one of the following two service execution systems:

A first service execution system 2 is configured to store feature information of a first call in the SDU 1 when the first call from a first network is received, generate a routing signal, route the first call to a second network according to the routing signal to trigger a second call on the second network, receive the second call that is transferred by a second service execution system 3 according to the feature information of the first call stored in the SDU 1, and perform connection processing on the first call and the second call.

The SDU 1 is configured to store the feature information of the first call, so that the second service execution system 3 performs querying.

The second service execution system 3 is configured to transfer the second call to the first service execution system 2 according to the feature information of the first call stored in the SDU 1 when the second call from the second network is received.

Preferably, the preceding SDU 1 is of a global type.

Referring to FIG 8, when two second service execution systems 3 exist, that is, the Service Broker platform includes a second service execution system 3a and a second service execution system 3b, the second service execution system 3a and the second service execution system 3b respectively transfer received calls to the first service execution system 2 by querying the SDU 1. Similarly, when multiple second execution systems 3 exist, multiple second execution systems 3 respectively transfer the received calls to the first service execution system 2 by querying the SDU 1.

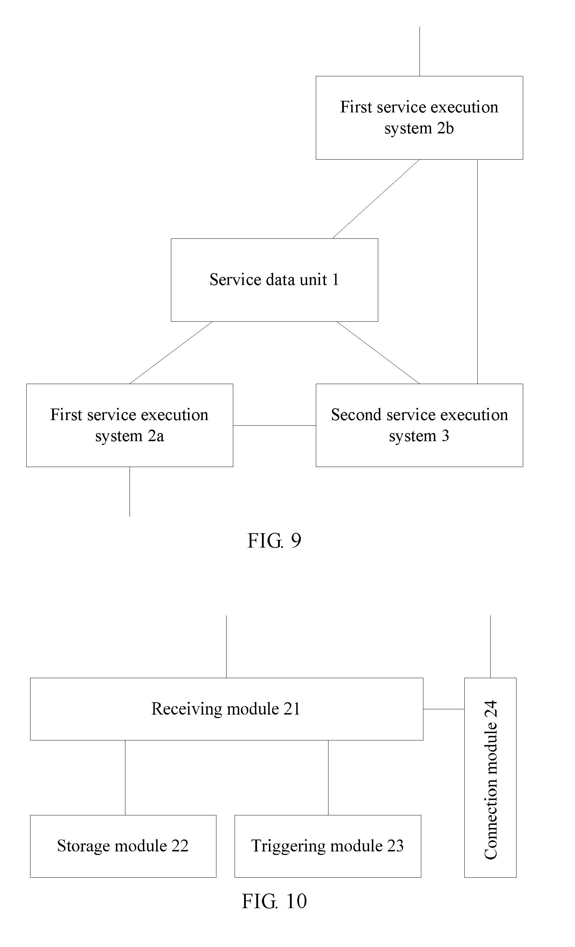

Referring to FIG 9, when two first service execution systems 2 exist, that is, the Service Broker platform includes a first service execution system 2a and a first service execution system 2b, the second service execution system 3 transfers a received call to the first service execution system 2a and/or the first service execution system 2b by querying the SDU 1. Similarly, when multiple first execution systems 2 exist, the second service execution systems 3 transfers the received call to one or multiple first service execution systems 2 by querying the SDU 1.

In a practical application, multiple SDUs may exist.

It can be seen that, by setting the SDU in the Service Broker system (that is the Service Broker platform) and transferring the associated calls from multiple networks to a service execution system for connection processing according to the feature information stored in the SDU, the Service Broker platform supports the associated calls triggered by multiple networks; thereby, popularization and application of the Service Broker technology are further facilitated.

The Service Broker system shown in FIG 7, FIG.8, or FIG9 may implement the method shown in FIG 2, FIG4, or FIG 6 and the relevant embodiment; therefore, a work flow is not described herein again.

Referring to FIG 10, an embodiment of the present invention provides a service execution system in the aforementioned Service Broker system, that is, the first service execution system 2, including:
a receiving module 21, configured to receive a first call from a first network;
a storage module 22, configured to store feature information of the first call in an SDU 1 that is set in the Service Broker system when the receiving module 21 receives the first call;
a triggering module 23, configured to generate a routing signal, and route the first call to a second network according to the routing signal to trigger a second call on the second network when the receiving module 21 receives the first call; and
a connection module 24, configured to receive the second call that is transferred by the second service execution system according to the feature information of the first call stored in the SDU, and perform connection processing on the first call and the second call.

Further, the feature information of the first call includes a session ID of the first call, association information used to identify an association relation between the first call and the second call, and a corresponding relation between the association information and the session ID of the first call.

Furthermore, the service execution system 2 further includes a transferring module, configured to transfer the second call according to the feature information stored in the SDU 1 when the second call from the second network is received. That is, in the practical application, a service execution system may store the feature information of a received call in the SDU, and another service execution system may transfer a call from another network to this service execution system through querying. This service execution system may also transfer a received call to another service execution system by querying the SDU.

It can be seen that, by setting the SDU in the Service Broker system (that is the Service Broker platform) and transferring the associated calls from multiple networks to a service execution system for connection processing according to the feature information stored in the SDU, the Service Broker platform supports the associated calls triggered by multiple networks; thereby, popularization and application of the Service Broker technology are further facilitated.

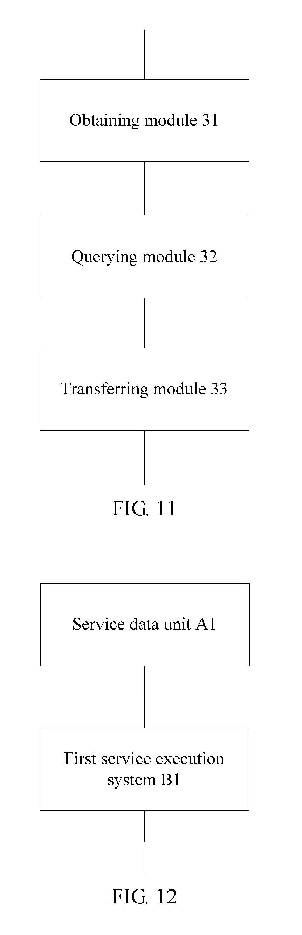

Referring to FIG 11, an embodiment of the present invention provides another service execution system in the aforementioned Service Broker system, that is, the second service execution system 3, including:
an obtaining module 31, configured to obtain association information of a first call from a second call when the second call from a second network is received;
a querying module 32, configured to search a session ID of the first call in a service data module 1 that is set in the Service Broker system by using the association information obtained by the obtaining module 31 as an index; and
a transferring module 33, configured to modify a session ID of the second call into the session ID of the first call found by the querying module 32, and transfer service logic of the second call to service logic of the first call in the first service execution system 2.

The second call from the second network that is received by the service execution system 3 provided by this embodiment of the present invention is the second call that is triggered on the second network when the first service execution system 2 routes the first call to the second network according to the routing signal that is generated when receiving the first call from the first network.

Furthermore, the service execution system 3 further includes a storage module, configured to store the feature information of the first call in the SDU 1 that is set in the Service Broker system when the first call from the first network is received; and a connection module, configured to receive a third call that is transferred by a third service execution system according to the feature information of the first call stored in the SDU and perform connection processing on the first call and the third call. That is, in the practical application, a service execution system may store the feature information of a received call in the SDU, and another service execution system may transfer a call from another network to this service execution system through querying. This service execution system may also transfer a received call to another service execution system by querying the SDU.

It can be seen that, by setting the SDU in the Service Broker system (that is the Service Broker platform) and transferring the associated calls from multiple networks to a service execution system for connection processing according to the feature information stored in the SDU, the Service Broker platform supports the associated calls triggered by multiple networks; thereby, popularization and application of the Service Broker technology are further facilitated.

The service execution systems recorded in FIG 10 and FIG 11 and the embodiments may employ the method that is performed by a service execution system and recorded in FIG 2, FIG 4 or FIG 6 and the relevant embodiment; therefore, the details are not described herein again.

It should be noted that, the service execution system 2 and the service execution system 3 in the preceding Service Broker system may be implemented through hardware, and may also be implemented through software, and may also be implemented through a combination manner of the hardware and the software. Definitely, in the practical application, the service execution system 2 and the service execution system 3 may be distributed at any position in the Service Broker system (that is the Service Broker platform), in which the service execution system 2 may also be commonly implemented through a software function module, a hardware function module, and a combined function module of software and hardware that are distributed at different positions of the Service Broker system; and a same principle is also applied to the service execution system 3.

Referring to FIG 12, an embodiment of the present invention further provides a Service Broker system, including an SDU A1 and a first service execution system B1.

The first service execution system B1 is configured to store feature information of a first call in the SDU A1 when the first call from a first network is received, generate a routing signal, route the first call to a second network according to the routing signal to trigger a second call on the second network, and receive and perform connection processing on the second call that is transferred by a second service execution system according to the feature information of the first call stored in the SDU A1.

The SDU A1 is configured to store the feature information of the first call, so that the second service execution system performs querying.

One or multiple first service execution systems B1 and SDUs A1 may exist in a practical application.

It should be noted that the service execution system B1 in this embodiment of the present invention may implement a function shown in the service execution system 2 of the preceding embodiment; therefore, a related work process is not described herein again.

It can be seen that, by setting the SDU in the Service Broker system (that is the Service Broker platform) and transferring the associated calls from multiple networks to a service execution system for connection processing according to the feature information stored in the SDU, the Service Broker platform supports the associated calls triggered by multiple networks; thereby, popularization and application of the Service Broker technology are further facilitated.

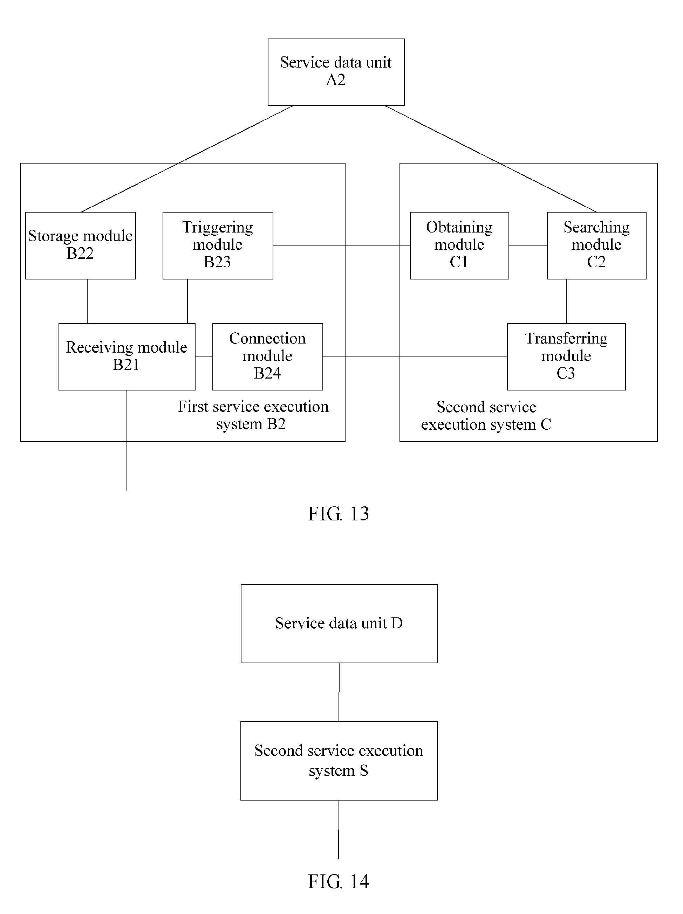

Referring to FIG 13, an embodiment of the present invention further provides a Service Broker system, including an SDU A2 and a first service execution system B2.

The first service execution system B2 is configured to store feature information of a first call in the SDU A2 when the first call from a first network is received, generate a routing signal, route the first call to a second network according to the routing signal to trigger a second call on the second network, and receive and perform connection processing the second call that is transferred by a second service execution system according to the feature information of the first call stored in the SDU A2.

The SDU A2 is configured to store the feature information of the first call, so that the second service execution system performs querying.

One or multiple first service execution systems B2 and SDUs A2 may exist in a practical application.

The SDU A2 may be of a global type.

Furthermore, the Service Broker system further includes a second service execution system C, configured to transfer the second call to the first service execution system B2 according to the feature information of the first call stored in the SDU A2 when the second call from the second network is received.

The preceding first service execution system B2 includes:
a receiving module B21, configured to receive the first call from the first network;
a storage module B22, configured to store the feature information of the first call in the SDU A2 when the receiving module B21 receives the first call;
a triggering module B23, configured to generate the routing signal, and route the first call to the second network according to the routing signal to trigger the second call on the second network when the receiving module B21 receives the first call; and
a connection module B24, configured to receive the second call that is transferred by the second service execution system C according to the feature information of the first call stored in the SDU A2, and perform connection processing the first call and the second call.

The feature information of the first call includes a session ID of the first call, association information used to identify an association relation between the first call and the second call, and a corresponding relation between the association information and the session ID of the first call.

The second service execution system C includes:
an obtaining module C1, configured to obtain the association information of the first call from the second call when the second call from the second network is received;
a querying module C2, configured to query the session ID of the first call in the service data module A2 by using the association information obtained by the obtaining module C 1 as an index; and
a transferring module C3, configured to modify a session ID of the second call into the session ID of the first call found by the querying module C2, and transfer service logic of the second call to service logic of the first call in the first service execution system B2.

It should be noted that, the service execution system B2 and the service execution system C in this embodiment of the present invention may implement functions shown in the service execution system 2 and the service execution system 3 in the preceding embodiments, therefore related work processes are not described herein again.

In the practical application, one or multiple second service execution systems C may exist.

It can be seen that, by setting the SDU in the Service Broker system (that is the Service Broker platform) and transferring the associated calls from multiple networks to a service execution system for connection processing according to the feature information stored in the SDU, the Service Broker platform supports the associated calls triggered by multiple networks; thereby, popularization and application of the Service Broker technology are further facilitated.

Referring to FIG 14, an embodiment of the present invention further provides a Service Broker system, including an SDU D and a second service execution system S.

The SDU D is configured to store feature information of a first call from a first network.

The second service execution system S is configured to transfer a second call to a first service execution system according to the feature information of the first call stored in the SDU D when the second call from a second network is received, in which the feature information of the first call is stored in the SDU D when the first service execution system receives the first call from the first network.

It can be seen that, by setting the SDU in the Service Broker system (that is the Service Broker platform) and transferring the associated calls from multiple networks to a service execution system for connection processing according to the feature information stored in the SDU, the Service Broker platform supports the associated calls triggered by multiple networks; thereby, popularization and application of the Service Broker technology are further facilitated.

It should be noted that, relational terms such as first and second and the like may be used solely to distinguish one entity or operation from another entity or operation without necessarily requiring or implying any actual relationship or sequence between the entities or operations. Furthermore, the terms "includes", "comprises" or any other variation thereof intend to cover a non-exclusive inclusion so that a process, a method, an article, or a device including a list of elements includes not only these elements but also other elements that are not specifically listed, or further includes inherent elements of the process, method, article, or device. Without more constraints, an element limited by "comprises a..." does not preclude the existence of additional identical elements in the process, method, article, or device including the element.

Those of ordinary skill in the art may understand that all or a part of the steps of the methods according to the preceding embodiments of the present invention may be implemented by a program instructing relevant hardware. The program may be stored in a computer readable storage medium. When the program is executed, the steps of the methods are performed. The storage medium includes a Read Only Memory (ROM), a Random Access Memory (RAM), a magnetic disk, and a Compact Disk-Read Only Memory (CD-ROM).

The preceding descriptions are merely embodiments of the present invention, but are not intended to limit the protection scope of the present invention. Any modification, equivalent replacement, or improvement made without departing from the idea and principle of the present invention should fall within the protection scope of the present invention.

## Claims

1. A method for connecting associated calls between networks, comprising:
when receiving a first call from a first network, storing, by a first service execution system, feature information of the first call in a service data unit, generating a routing signal, and routing the first call to a second network according to the routing signal to trigger a second call on the second network; and
receiving, by the first service execution system, the second call that is transferred by a second service execution system according to the feature information of the first call stored in the service data unit, and performing connection processing on the first call and the second call.

2. The method according to claim 1, wherein the feature information of the first call comprises a session identifier of the first call, association information used to identify an association relation between the first call and the second call, and a corresponding relation between the session identifier of the first call and the association information.

3. The method according to claim 2, wherein the transferring, by the second service execution system, the second call to the first service execution system according to the feature information of the first call stored in the service data unit comprises:
obtaining, by the second service execution system, the association information from the second call;
querying, by the second service execution system, the session identifier of the first call in the service data unit using the obtained association information as an index; and
modifying, by the second service execution system, a session identifier of the second call into the found session identifier of the first call, and transferring service logic of the second call to service logic of the first call in the first service execution system.

4. A Service Broker system, comprising: a service data unit and a first service execution system, wherein
the first service execution system is configured to store feature information of a first call in the service data unit when the first call from a first network is received, generate a routing signal, route the first call to a second network according to the routing signal to trigger a second call on the second network, receive the second call that is transferred by a second service execution system according to the feature information of the first call stored in the service data unit, and perform connection processing on the first call and the second call; and
the service data unit is configured to store the feature information of the first call.

5. The Service Broker system according to claim 4, wherein the service data unit is of a global type.

6. The Service Broker system according to claim 4, wherein the first service execution system comprises:
a receiving module, configured to receive the first call from the first network;
a storage module, configured to store the feature information of the first call in the service data unit when the receiving module receives the first call;
a triggering module, configured to generate the routing signal, and route the first call to the second network according to the routing signal to trigger the second call on the second network when the receiving module receives the first call; and
a connection module, configured to receive the second call that is transferred by the second service execution system according to the feature information of the first call stored in the service data unit, and perform connection processing on the first call and the second call.

7. The Service Broker system according to claim 4, wherein the Service Broker system further comprises a second service execution system, configured to transfer the second call to the first service execution system according to the feature information of the first call stored in the service data unit when the second call from the second network is received.

8. The Service Broker system according to claim 7, wherein the feature information of the first call comprises a session identifier of the first call, association information used to identify an association relation between the first call and the second call, and a corresponding relation between the association information and the session identifier of the first call.

9. The Service Broker system according to claim 8, wherein the second service execution system comprises:
an obtaining module, configured to obtain the association information of the first call from the second call when the second call from the second network is received;
a querying module, configured to query the session identifier of the first call in the service data module using the association information obtained by the obtaining module as an index; and
a transferring module, configured to modify a session identifier of the second call into the session identifier of the first call found by the querying module, and transfer service logic of the second call to service logic of the first call in the first service execution system.

10. A Service Broker system, comprising: a service data unit and a second service execution system, wherein
the service data unit is configured to store feature information of a first call from a first network; and
the second service execution system is configured to transfer a second call to a first service execution system according to the feature information of the first call stored in the service data unit when the second call from a second network is received, wherein the feature information of the first call is stored in the service data unit when the first service execution system receives the first call from the first network.
